# DEMANDE DE BREVET EUROPEEN

(11) **EP 4 838 327 A1**
(43) Date de publication de la demande: **11.11.2026**
(21) Numéro de dépôt: 26176448.4
(22) Date de dépôt: 05.05.2026
(51) Int. Cl.: G05D 1/46

(54) **PROCEDE DE DETERMINATION D'UN INDICATEUR DE FONCTIONNEMENT LIE AU DEPLACEMENT D'UN ENGIN**

(30) Priorité: 07.05.2025 FR 2504873
(71) Demandeur: 432 Technologies, 64500 Saint-Jean-De-Luz (FR)
(72) Inventeur: ADO-SOLABERRIETA, Jean-Baptiste, 64500 Saint-Jean-de-Luz (FR)
(74) Mandataire: Germain Maureau

(57) **Abrégé**

Procédé de détermination d'au moins un indicateur de fonctionnement (IND) lié au déplacement d'au moins un engin par rapport à une infrastructure, le procédé de détermination comprenant les étapes suivantes : disposer, sur une période glissante passée, de valeurs réelles (VR) horodatées relatives à l'engin ; disposer d'un modèle de contraintes (MOD) ; déterminer à partir des valeurs réelles (VR), sur une période glissante future, des valeurs estimées (VE) horodatées relatives à la trajectoire et/ou à l'emplacement relatif de l'engin (1) par rapport à l'infrastructure (3) ; déterminer l'au moins un indicateur de fonctionnement (IND) en fonction du modèle de contraintes (MOD), des valeurs estimées (VE) et d'un ou plusieurs indices de confiance (CFI) relatifs à une ou plusieurs valeurs estimées (VE), le ou les indices de confiance (CFI) étant obtenus par corrélation entre valeurs réelles (VR) et valeurs estimées (VE) sur la période glissante passée.

## Description

### Domaine de l'invention

La présente invention concerne un procédé de détermination d'un indicateur de fonctionnement lié au déplacement d'un engin.

### Art antérieur

Par engin, il est entendu tout type de véhicule, habité ou non, apte à se déplacer par rapport à une infrastructure qui peut également être de plusieurs types.

Un tel couple engin-infrastructure se retrouve par exemple dans le domaine des opérations maritimes. En effet, un ou plusieurs engins peuvent être utilisés par exemple pour le démantèlement de plateformes pétrolières, gazières ou d'éoliennes marines.

Ce démantèlement nécessite la coordination et la synchronisation différents engins comme de grues, des embarcations annexes, drones ou tous types d'engins télépilotés à divers degrés d'autonomie. Des aéronefs peuvent également être utilisés, comme des hélicoptères.

De même, un engin peut être sous-marin comme un robot sous-marin partant d'une infrastructure telle qu'un bateau. Cet engin peut avoir une utilité pour l'installation de câbles, pipelines ou l'exploration sous-marine.

Bien que ces opérations depuis ou vers les infrastructures soient aujourd'hui considérées comme routinières, la mise en œuvre des engins (déploiement ou récupération) vers et depuis les infrastructures, en particulier dans des conditions météorologiques défavorables, est considérée comme délicate. L'environnement est exigeant et dangereux pour le matériel et l'équipage lorsqu'il y en a un.

Afin de gérer le risque, ces infrastructures, sont dotées de capteurs et d'interfaces qui présentent les conditions auxquelles l'équipage ou le pilote à distance doit faire face. Parfois, ces systèmes de planification offrent une fonction d'anticipation et de préparation des opérations à mener.

Toutefois, des conditions complexes et changeantes impliquent une haute charge de travail et de surveillance. Aux conditions météorologiques, par exemple en mer, se combinent le roulis, le soulèvement et le tangage du pont d'envol de l'infrastructure.

Les repères visuels du pilote d'un engin à l'approche ou au départ de son infrastructure sont également souvent altérés par les embruns ou le brouillard voire les obstacles. Les opérations nocturnes sont également fréquentes.

La combinaison des mouvements de l'infrastructure et des conditions météorologiques locales contribue à la dégradation des qualités de manœuvre des engins déployés.

Enfin, l'aide à l'équipage ou au pilote par des moyens de calculs implique une masse énorme de données à traiter liée aux possibilités de manœuvres futures envisageables et de l'impact de l'environnement sur celles-ci.

Ceci imposerait dans le cas d'un système intégré d'aide à la décision des puissances de calcul très conséquentes peu conciliables avec un embarquement sur une infrastructure ou un engin.

La présente invention vise à résoudre tout ou partie des inconvénients mentionnés ci-dessus.

### Exposé de l'invention

A cet effet, la présente invention concerne un procédé de détermination d'au moins un indicateur de fonctionnement lié au déplacement d'au moins un engin par rapport à une infrastructure, le procédé de détermination comprenant les étapes suivantes :
disposer, sur une période glissante passée, de valeurs réelles horodatées relatives à une trajectoire et/ou à un emplacement relatif de l'engin par rapport à l'infrastructure,
disposer d'un modèle de contraintes incluant des données relatives à des plages de fonctionnement délimitées par des valeurs limites d'accélérations, de vitesses et/ou de distances minimales entre l'engin et l'infrastructure,
déterminer à partir des valeurs réelles, sur une période glissante future, des valeurs estimées horodatées relatives à la trajectoire et/ou à l'emplacement relatif de l'engin par rapport à l'infrastructure,
déterminer l'au moins un indicateur de fonctionnement en fonction du modèle de contraintes, des valeurs estimées et d'un ou plusieurs indices de confiance relatifs à une ou plusieurs valeurs estimées, le ou les indices de confiance étant obtenus par corrélation entre valeurs réelles et valeurs estimées sur la période glissante passée.

L'indicateur de fonctionnement prend en compte plusieurs éléments et s'adapte en permanence.

Selon une possibilité, la corrélation entre valeurs réelles et valeurs estimées sur la période glissante passée est une corrélation dynamique qui prend en compte l'évolution des valeurs réelles et valeurs estimées. Il peut s'agir d'une comparaison obtenue par différents modes de calculs, par exemple des convolutions mathématiques. Alternativement ou en outre, les modes de calculs peuvent être adaptés empiriquement et/ou selon l'engin et l'infrastructure considérée.

La corrélation peut être calculée de telle sorte à ne prendre en compte certains phénomènes qu'à partir d'un niveau déterminé de récurrence ou magnitude (fonctionnement de type filtre passe-bas / passe-haut). Par exemple si une seule valeur estimée est fortement inexacte, l'impact sur l'indice de confiance sera limité alors qu'une inexactitude persistante fera diminuer l'indice de confiance.

L'indicateur de fonctionnement peut être relatif à la sécurité, à une grandeur physique comme un ratio par rapport à une vitesse maximale, etc. L'indicateur de fonctionnement est un indicateur mixte dans le sens où il prend en compte le modèle de contraintes, les données en temps réel, les prévisions ainsi que la fiabilité de ces données. La fiabilité dépend par exemple de l'incertitude de mesure, d'autres paramètres pouvant être pris en compte. Cet indicateur informe l'utilisateur de manière immédiate et intuitive si un conflit entre le modèle de contraintes et les prévisions est prévu dans la période glissante future.

Par exemple, si une mesure d'une grandeur physique est fiable car le capteur correspondant fonctionne correctement mais que la mesure en elle-même diverge par rapport à la valeur acceptable par le modèle de contrainte, l'indicateur de fonctionnement reflètera cette situation.

Si la qualité de la mesure en elle-même est mauvaise en raison d'un dysfonctionnement du capteur, cela sera également reflété par l'indicateur de fonctionnement.

L'indicateur de fonctionnement réagit en fonction de causes multiples. L'indicateur de fonctionnement est une synthèse signalant tout fonctionnement ne correspondant pas à un fonctionnement attendu. L'indicateur de fonctionnement est traité par un opérateur humain ou une machine de pilotage de l'engin comme une donnée informative.

L'indicateur de fonctionnement n'impacte pas directement la commande de l'engin. Toutefois, l'indicateur de fonctionnement peut être pris en compte comme une alerte émise à destination de l'opérateur humain ou de la machine de pilotage de l'engin.

Cette disposition permet de connaitre au plus tôt et de manière évidente par une information synthétique simple qu'un ajustement de pilotage est peut-être nécessaire.

Cela laisse ainsi du temps pour déterminer la manière de procéder en adaptant ou non le pilotage de l'engin. L'opérateur peut également prendre le temps d'approfondir le sujet et chercher l'origine de l'évènement détecté. Alternativement et si nécessaire, il est possible de ne pas tenir compte de l'indicateur de fonctionnement car une situation plus urgente est à régler comme par exemple un atterrissage d'urgence en cas de manque de carburant.

Le modèle de contraintes représente les contraintes théoriques, par exemple définies par avance, concernant les limites à ne pas dépasser par l'engin à l'approche ou au départ de l'infrastructure. Le modèle de contraintes est en pratique défini par le donneur d'ordre de l'opération visant à l'approche ou au départ de l'engin de l'infrastructure.

Les valeurs estimées sont une projection dans le futur qui sont obtenues à partir des valeurs réelles passées. Il est par ailleurs vérifié en permanence si les valeurs estimées correspondent bien aux valeurs réelles. Le ou les indices de confiance sont ainsi déterminés et utilisés dans le calcul de l'indicateur de fonctionnement.

Les valeurs estimées sont donc comparées au modèle de contraintes pour savoir si les limites de l'engin par rapport à l'infrastructure seront bien respectées dans la période glissante future. L'exactitude des valeurs estimées est également prise en compte pour éviter de dépasser les valeurs limites par manque d'exactitude des calculs.

Le modèle de contraintes peut être relatif à un type d'engin en particulier voire à un engin en particulier en étant adapté aux variations de fabrication et de performances d'un engin à l'autre.

Par ailleurs, le modèle de contraintes est relatif à un couple engin-infrastructure. Il est ainsi possible que l'infrastructure se déplace. Par exemple, si l'infrastructure est un bateau, elle peut être soumise à un déplacement selon une trajectoire déterminée pour aller d'un point à un autre mais également au tangage et au roulis ou tout autre mouvement. Si l'infrastructure est fixe, en ville par exemple, les obstacles et la densité des immeubles génèrent des perturbations aérologiques qui peuvent perturber les arrivées et départs, en particuliers des aéronefs.

Les calculs restent par ailleurs frugaux puisqu'ils sont réalisés de manière glissantes sur des périodes définies limitées. Les calculs peu pertinents sont ainsi éliminés.

Par ailleurs, du fait de son adaptabilité, le procédé peut être utilisé avec une grande variété d'engins et d'infrastructures et une grande variété de mouvements relatifs possibles entre l'engin et de l'infrastructure.

Selon un aspect de l'invention, les valeurs réelles horodatées relatives à une trajectoire et/ou à un emplacement relatif de l'engin par rapport à l'infrastructure incluent des commandes de pilotage de l'engin et/ou de l'infrastructure.

Non seulement, les valeurs réelles sont relatives au comportement de l'engin mais également aux commandes de pilotage qui lui sont appliquées. Il est en effet important de savoir si le sens d'avancement correspond à une commande de trajectoire rectiligne ou en virage et également si une accélération, une décélération ou un freinage sont appliqués. Il est en effet avantageux de connaitre la complexité de la manœuvre qui peut nécessiter plus ou moins de finesse et de précision de pilotage.

Les commandes de pilotage peuvent inclure le cap, la commande de vitesse ou d'accélération, un changement d'altitude ou de profondeur en cours.

Selon un aspect de l'invention, à chaque valeur estimée correspond un indice de confiance correspondant. Cette disposition permet de gagner en précision dans la détermination de l'au moins un indicateur de fonctionnement.

Alternativement, il peut être prévu un seul indice de confiance pour plusieurs valeurs estimées. Ceci peut être choisi dans le but de limiter les calculs réalisés.

La période glissante future peut être identique ou différente de la période glissante passée. Selon une possibilité, la période glissante future correspond à trois fois la période passée.

Selon un aspect de l'invention, l'au moins un indicateur de fonctionnement fait référence à :
une prévision de fonctionnement « anormal » lorsqu'au moins une valeur estimée est hors d'au moins une plage de fonctionnement,
une prévision de fonctionnement « à adapter » lorsque les valeurs estimées sont comprises dans les plages de fonctionnement et lorsque au moins une valeur estimée est à l'intérieur d'une marge dynamique d'une plage de fonctionnement partant d'une valeur limite de ladite plage de fonctionnement,
une prévision de fonctionnement « normal » lorsque les valeurs estimées sont comprises dans les plages de fonctionnement en dehors des marges dynamiques.

La marge dynamique est une portion de la plage de fonctionnement proche d'une valeur limite. Une plage de fonctionnement peut être relative à une valeur d'accélération relative, à une valeur de vitesse relative ou un emplacement relatif entre l'engin et l'infrastructure.

Pour le cas de la vitesse et de l'accélération, une valeur limite maximale peut être définie avec une marge dynamique partant de cette valeur maximale et descendant vers une valeur maximale de sécurité qui est inférieure.

Une valeur limite nulle peut être définie et dans ce cas, aucune marge dynamique peut n'être prévue pour une vitesse proche d'une vitesse nulle par exemple. Alternativement, une vitesse positive minimale peut être définie avec une marge dynamique allant jusqu'à une vitesse minimale de sécurité supérieure à la vitesse minimale.

L'emplacement relatif peut comprendre une valeur limite minimale et une valeur limite maximale avec chaque fois une marge dynamique.

Trois plages de fonctionnement peuvent être définies pour chaque composante spatiale, c'est-à-dire en hauteur, en distance longitudinale et en distance transversale. Il est également possible de prévoir un repère relatif entre l'engin et l'infrastructure pour limiter les calculs.

Par ailleurs, les valeurs limites d'accélérations et de vitesses peuvent être différentes selon l'emplacement relatif de l'engin et de l'infrastructure. L'au moins un indicateur de fonctionnement est adaptatif.

L'au moins un indicateur de fonctionnement est particulièrement intéressant lorsqu'un fonctionnement « anormal » ou « à adapter » est prévu car il est possible d'adapter l'accélération relative, la vitesse relative et/ou l'emplacement relatif pour que l'indicateur de fonctionnement reviennent à un fonctionnement « normal ».

Il peut également être prévu une pluralité d'indicateurs de fonctionnement, chaque indicateur de fonctionnement étant relatif à une ou plusieurs plages de fonctionnement. Notamment, un indicateur de fonctionnement peut être relatif à l'ensemble des plages de fonctionnement de sorte à indiquer de manière claire toute prévision anormale ou nécessitant une adaptation du pilotage de l'engin et/ou de l'infrastructure.

Selon un aspect de l'invention, le ou les indices de confiance influent sur au moins une marge dynamique, l'au moins une marge dynamique étant augmentée lorsque le ou les indices de confiance diminuent.

Un indice de confiance faible signifie que la prévision des valeurs estimées pour la période glissante passée est relativement peu précise. L'indice de confiance est un outil permettant de quantifier cette inexactitude.

Si les valeurs estimées sont relativement inexactes, l'augmentation de la marge dynamique est utile pour le pilotage de l'engin.

Chaque marge dynamique peut être définie de telle sorte à ne pas descendre en deçà d'une valeur plancher correspondante lorsque l'indice de confiance est maximal.

Selon un aspect de l'invention, la valeur plancher correspond à une marge de sécurité du modèle de contraintes. Cette marge de sécurité est fixe et considérée comme une donnée d'entrée.

Le modèle de contraintes définit ainsi un domaine opérationnel de sécurité dans chaque plage de fonctionnement en dehors des marges de sécurité. Il s'agit des domaines autorisés par le modèle de contraintes pour l'engin.

Le procédé permet ainsi de déterminer de nouvelles marges plus larges qui sont les marges dynamiques. Les marges dynamiques prennent en compte les conditions réelles de sorte à définir un domaine opérationnel dynamique qui est réduit par rapport au domaine opérationnel de sécurité ou qui est équivalent lorsque les marges dynamiques sont les mêmes que les marges de sécurités.

Il apparait ainsi que le domaine opérationnel dynamique est en permanence adapté et que l'indicateur de fonctionnement prend en compte cette adaptation.

Ainsi, le résultat du procédé de détermination, l'au moins un indicateur de fonctionnement est simple et facilement compréhensible par l'utilisateur sans qu'il soit nécessaire pour l'utilisateur de suivre d'autres paramètres de fonctionnement directement comme l'accélération relative, la vitesse relative ou l'emplacement relatif.

L'au moins un indicateur de fonctionnement est une synthèse dynamique, évolutive en temps réel, des conditions locales et des possibilités de manœuvre de l'engin.

Selon un aspect de l'invention, les valeurs estimées sont déterminées à des pas de temps définis, à chaque pas de temps correspondant au moins une valeur estimée.

Cette disposition permet de réduire la puissance de calcul nécessaire car les pas de temps peuvent être plus ou moins rapprochés. A chaque pas de temps, différentes valeurs estimées peuvent être calculées comme au moins une position relative de l'engin par rapport à l'infrastructure, une vitesse relative ou une accélération relative.

Selon un aspect de l'invention, le pas de temps peut être variable ou constant. De préférence, le pas de temps est défini par rapport aux caractéristiques de l'engin en ce qui concerne ses possibilités de déplacements ou manœuvrabilité.

Ainsi, si un engin peut accélérer rapidement, le pas de temps peut être défini comme suffisamment court pour suivre le déplacement de l'engin de manière suffisante.

Si la valeur estimée concerne l'emplacement relatif de l'engin par rapport à l'infrastructure, la capacité de l'engin à faire évoluer de cap rapidement peut également être prise en compte pour définir le pas de temps.

Le pas de temps peut également être adapté au cours du temps en fonction de la vitesse et/ou de l'accélération. En effet, si l'engin ralentit, il peut être avantageux de réduire le pas de temps pour limiter les calculs à réaliser.

Selon un aspect de l'invention, le procédé de détermination d'au moins un indicateur de fonctionnement comprend une étape additionnelle consistant à déterminer au moins deux secteurs angulaires de compatibilité de vitesses et/ou accélérations avec le modèle de contraintes, chaque secteur angulaire étant défini entre deux caps possibles de l'engin.

En d'autres termes, seules certaines vitesses ou accélérations peuvent être prévues à l'intérieur d'un secteur angulaire tout en respectant le modèle de contraintes, c'est-à-dire en restant à l'intérieur des plages de fonctionnement.

Par cap possible, il est entendu un cap qui n'est pas actuellement réglé mais peut être atteint par un réglage différent des commandes de l'engin.

Les secteurs angulaires peuvent être fixes pour un même engin ou variables en fonction de divers paramètres comme l'accélération ou la vitesse relative.

Par cap, il est entendu une direction horizontale définie par un angle par rapport à une direction de référence comme une direction vers le nord.

Les vitesses ou accélérations compatibles peuvent être déterminées pour la période glissante future ou pour une période future différente. Par ailleurs, les pas de temps utilisés pour déterminer les valeurs estimées et l'au moins un indicateur de fonctionnement peuvent être utilisés.

Egalement, pour chaque secteur angulaire, des pas de temps différents peuvent être utilisés pour calculer les vitesses et/ou accélérations compatibles.

De préférence, une pluralité de secteurs angulaires de compatibilité de vitesses et ou accélérations sont déterminés. En particulier, la pluralité de secteurs angulaires constitue un disque complet.

Pour chaque secteur angulaire, les valeurs de vitesses et accélérations compatibles peuvent correspondre à une ou plusieurs valeurs limites à ne pas dépasser. La marge dynamique peut être prise en compte pour conseiller de ne pas aller dans la marge dynamique.

Selon un aspect de l'invention, la compatibilité peut alternativement ou en outre correspondre à une indication de respect du modèle de contrainte lorsque les paramètres de commandes de l'engin sont maintenus et que seul le cap est modifié.

Ainsi, il est possible d'informer le pilote de l'engin des contraintes limites en termes de vitesse, accélération ou emplacement par rapport à l'infrastructure et/ou simplement signaler qu'un changement de cap est possible dans un ou plusieurs secteurs angulaires.

La compatibilité peut être déterminée selon différents pas de temps en fonction des secteurs angulaires. Le secteur angulaire à l'intérieur duquel est situé le cap peut être mis à jour plus souvent que le secteur angulaire à l'opposé. Il est en effet moins probable que cap soit modifié de 180° plutôt qu'il reste dans une direction proche de la direction actuelle.

Les pas de temps peuvent également être adaptables en fonction d'autres paramètres comme la connaissance de commandes à venir de l'engin lors de réalisation de manœuvres selon un schéma de commande prédéfini. La finesse des commandes ou des temps de réponses des automatismes peuvent également être pris en compte.

Il peut être prévu des secteurs angulaires d'angles et de tailles variables selon les compatibilités de vitesses et/ou d'accélération. Chaque secteur angulaire correspond ainsi à une zone, qui peut être variable, avec des conditions sensiblement identiques en termes de pilotage de l'engin. Ainsi, il est possible de repérer visuellement rapidement quels changements de cap peuvent être effectués tout en respectant le modèle de contraintes.

Selon un aspect de l'invention, le procédé de détermination d'au moins un indicateur de fonctionnement comprend une étape consistant à disposer de données environnementales, lesdites données environnementales étant également prises en compte pour déterminer les valeurs estimées et/ou l'au moins un indicateur de fonctionnement.

Les données environnementales incluent des données relatives à la météo, l'ensoleillement, la luminosité, le vent, l'humidité, la pression et plus généralement toute données relative à un phénomène local ou général pouvant avoir un impact sur le déplacement de l'engin et de l'infrastructure. Ainsi, les données environnementales incluent les données géographiques comme le relief ou la profondeur dans le cas d'engins marins.

Les données environnementales peuvent être des constantes, peuvent correspondre à des mesures passées soit dans la période glissante passée soit dans une autre période passée plus longue ou plus courte. Ces données peuvent être tridimensionnelles et éventuellement horodatées.

Les données environnementales peuvent correspondre à une saisie manuelle ou à des valeurs moyennes par exemple en l'absence de données réelles. Les valeurs moyennes peuvent correspondre à des données statistiques historiques.

Selon un aspect de l'invention, le modèle de contraintes présente des plages de fonctionnement spécifiques en fonction de certaines données environnementales. Notamment, certaines marges de sécurité peuvent être majorées lorsqu'un vent local dépasse une certaine valeur dans une certaine direction.

Il apparait donc que l'au moins un indicateur de fonctionnement est constamment adapté, en fonction des données d'entrées changeantes, ces données d'entrées étant les valeurs réelles, les valeurs estimées et/ou le modèle de contraintes.

Les données environnementales considérées comme changeantes peuvent être disponibles à des pas de temps définis qui sont constants ou adaptables.

Selon un aspect de l'invention, lesdites données environnementales peuvent également être prises en compte pour déterminer les marges dynamiques.

Selon un aspect de l'invention, le procédé de détermination d'au moins un indicateur de fonctionnement comprend une étape consistant à disposer de données d'état relatives à l'engin et/ou l'infrastructure, lesdites données d'état étant également prises en compte pour déterminer les valeurs estimées et/ou l'au moins un indicateur de fonctionnement.

Les données d'état de l'engin peuvent être relatives au fonctionnement normal de l'engin, à un choix de mode de fonctionnement, par exemple si seule une partie de différents moteurs est utilisée. Les données d'état peuvent également être relatives à une avarie constatée dans l'engin ou un élément limitant le fonctionnement de l'engin pour une ou plusieurs fonctions. Les données d'état peuvent également prendre en compte les qualifications de l'opérateur/pilote ou du niveau d'autonomie de l'engin.

Les données d'état peuvent être des constantes ou variables sur la période glissante passée ou sur une autre période passée.

Les valeurs réelles, les données environnementales et/ou les données d'état peuvent également être prises en compte pour définir la période glissante passée, la période glissante future et/ou le pas de temps défini.

Cette adaptation peut être permanente ou réalisée à des intervalles réguliers ou selon certaines conditions devant être remplies par valeurs réelles, les données environnementales et/ou les données d'état.

Cette adaptabilité permet à l'indicateur de fonctionnement obtenu d'être suffisamment précis tout en limitant la puissance de calcul nécessaire.

Selon un aspect de l'invention, le procédé de détermination d'au moins un indicateur de fonctionnement comprend une étape préalable consistant à obtenir des valeurs réelles et/ou un modèle de contraintes, l'obtention consistant à recueillir des données de capteurs et/ou système de contrôle de l'engin et/ou de l'infrastructure, ou des données externes.

De préférence, les données sont recueillies par connexion filaire ou sans fils. Selon un aspect de l'invention, l'étape préalable consiste en outre à obtenir des données environnementales et/ou des données d'état de la même manière.

Le modèle de contraintes peut également être obtenu par le système de contrôle de l'engin et/ou de l'infrastructure par connexion filaire ou sans fils. Le modèle de contraintes peut également être enregistré en mémoire dudit système de contrôle. Le modèle de contraintes peut être enregistré sous forme d'une base de données.

Selon un aspect de l'invention, l'engin est adapté pour coopérer avec l'infrastructure de sorte à se positionner à un emplacement de réception de l'infrastructure après une approche et/ou à se séparer de l'infrastructure et se déplacer de manière indépendante.

De préférence, l'engin est un aéronef ou un engin marin. L'aéronef peut être un hélicoptère, un avion, un drone, etc. l'engin peut être habité ou non.

L'engin peut ainsi être un drone sous-marins un robot marin, une embarcation comme un bateau, un planeur sous-marin. L'engin peut aussi être un véhicule mis en œuvre par câble(s). Les applications du procédé sont donc multiples.

L'engin peut être piloté de l'intérieur ou à distance, par exemple de l'infrastructure ou d'un autre endroit. L'engin peut également être autonome et comprendre un système de pilotage paramétré pour lui permettre de coopérer avec l'infrastructure. Dans ce cas, l'indicateur de fonctionnement peut être une donnée d'entrée utilisée pour le pilotage de l'engin autonome. Un protocole de transmission spécifique peut être utilisé.

Pour certains engins, le modèle de contraintes peut correspondre au « Ship Helicopter Operating Limits » ou SHOL.

L'infrastructure peut correspondre à une piste d'atterrissage ou un vertiport au sol, sur un bâtiment fixe par rapport au sol comme des bâtiments ou constructions urbaines ou mobile par rapport au sol ou une étendue d'eau comme un navire, une plateforme offshore, etc. L'infrastructure peut également être un aéronef.

Alternativement ou en outre le procédé est adapté pour permettre le passage de l'engin à proximité de l'infrastructure tout en respectant le modèle de contraintes. Cette disposition est notamment utile lorsque l'infrastructure est mobile comme c'est le cas pour un bateau.

Selon un aspect de l'invention, le procédé de détermination d'au moins un indicateur de fonctionnement comprend une étape d'affichage d'une représentation graphique relative à l'au moins un indicateur sur une interface de l'engin, une interface de l'infrastructure et/ou une interface externe.

Selon un exemple, un indicateur de fonctionnement peut être représenté sous forme de symbole coloré. La couleur et/ou le symbole peuvent être différents si le fonctionnement est « normal », « anormal » ou « à adapter ». La représentation graphique peut également comprendre des caractères, mots ou expression éventuellement et être complétée par un indicateur sonore. La représentation graphique peut également être réalisée sous d'autres formes.

L'au moins un indice de confiance peut également être représenté. Cette disposition permet de vérifier si les manœuvres en cours sont facilement prévisibles par le procédé et ainsi si les manœuvres correspondent à celles normalement attendues.

Selon un aspect de l'invention, la représentation graphique comprend également les au moins deux secteurs angulaires de compatibilité de vitesses et/ou accélérations. La représentation graphique peut correspondre à un disque avec différentes parties colorées laissant apparaitre des couleurs et/ou formes qui peuvent être augmentées ou réduites en taille.

Le cap peut être sur la même représentation graphique en démarrant du centre du disque. Les routes et vitesses compatibles sont ainsi faciles à repérer.

Cette représentation graphique des secteurs angulaires laisse apparaitre de meilleures conditions si le maintien du cap à certaines limitations pour respecter le modèle de contraintes.

La représentation graphique peut également inclure un historique comprenant des valeurs réelles de la période glissante passée et/ou de périodes antérieures.

La présente invention concerne également un produit programme d'ordinateur comprenant des instructions de code agencées pour mettre en œuvre les étapes d'un procédé de détermination d'au moins un indicateur de fonctionnement tel que décrit ci-dessus lorsque ledit programme est exécuté sur un système de contrôle de l'engin et/ou de l'infrastructure.

Le système de contrôle inclut au moins un processeur comprenant le produit programme ordinateur. Le système de contrôle peut être constitué d'une seule entité locale au niveau de l'engin et/ou de l'infrastructure ou être déporté. Alternativement, le système de contrôle peut comprendre plusieurs entités adaptées pour communiquer ensemble.

Le système de contrôle comprend l'interface décrite ci-dessus. Ainsi, selon les cas, il peut être utile d'avoir l'interface dans l'engin par exemple si celui-ci est habité ou dans l'infrastructure si l'engin est autonome. Il peut également y avoir une interface dans l'engin et une interface dans l'infrastructure.

Le système de contrôle inclut également le ou les capteurs évoqués plus hauts. La présente invention concerne ainsi un tel système de contrôle. Dans le présent texte, l'engin est considéré comme la partie se déplaçant le plus comparativement à l'infrastructure. Bien évidemment, ces termes pourraient être inversés, l'au moins un indicateur de fonctionnement étant lié aux déplacements relatifs de l'engin par rapport à l'infrastructure.

Selon un aspect de l'invention, le procédé de détermination peut être mis en œuvre pour plusieurs engins simultanément. Une pluralité de systèmes de contrôle distincts correspondants peut être utilisés ou un seul système centralisé.

De préférence, lorsque le procédé est mis en œuvre avec une pluralité d'engins, les données environnementales d'un engin prennent en compte les valeurs estimées des autres engins ainsi que les modèles de contraintes des autres engins.

Dans ce cas, les systèmes de contrôle et/ou le système centralisé sont agencés pour permettre le déplacement de la pluralité d'engins sans conflits.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig. 1] est un schéma d'un système de contrôle apte à réaliser un procédé de détermination d'au moins un indicateur de fonctionnement lié au déplacement d'au moins un engin par rapport à une infrastructure.
[Fig. 2] est un diagramme représentant les étapes du procédé de détermination de l'au moins un indicateur de fonctionnement.
[Fig. 3] est un schéma représentant une infrastructure et un engin apte à atterrir sur et décoller depuis l'infrastructure.
[Fig. 4] est une vue schématique d'une représentation graphique de l'au moins un indicateur de fonctionnement et d'un disque de compatibilité de vitesses et/ou accélérations de l'engin par rapport à l'infrastructure.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

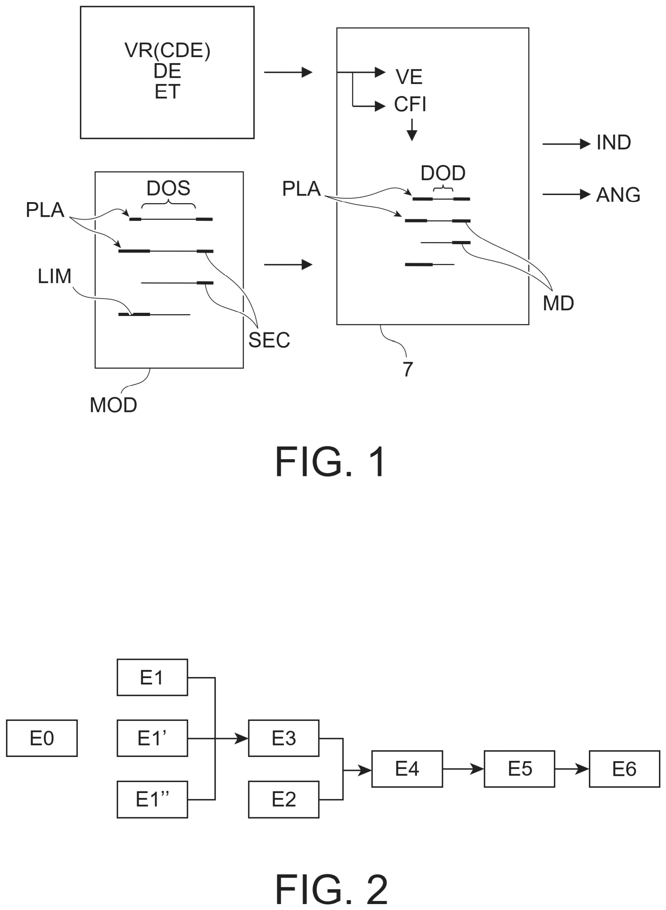

Comme illustré aux figures 1 à 3, un procédé de détermination d'au moins un indicateur de fonctionnement IND lié au déplacement d'au moins un engin 1 par rapport à une infrastructure 3 comprend plusieurs étapes.

Le procédé de détermination comprend une étape E1 consistant à disposer, sur une période glissante passée, de valeurs réelles VR horodatées relatives à une trajectoire et/ou à un emplacement relatif de l'engin 1 par rapport à l'infrastructure 3.

Le procédé de détermination comprend une étape E2 consistant à disposer d'un modèle de contraintes MOD incluant des données relatives à des plages de fonctionnement PLA délimitées par des valeurs limites LIM d'accélérations, de vitesses et/ou de distances minimales entre l'engin 1 et l'infrastructure 3.

Le procédé de détermination comprend une étape E3 consistant à déterminer à partir des valeurs réelles VR, sur une période glissante future, des valeurs estimées VE horodatées relatives à la trajectoire et/ou à l'emplacement relatif de l'engin 1 par rapport à l'infrastructure 3.

Le procédé de détermination comprend une étape E4 consistant à déterminer l'au moins un indicateur de fonctionnement IND en fonction du modèle de contraintes MOD, des valeurs estimées VE et d'un ou plusieurs indices de confiance CFI relatifs à une ou plusieurs valeurs estimées VE.

Le ou les indices de confiance CFI sont obtenus par corrélation entre valeurs réelles VR et valeurs estimées VE sur la période glissante passée.

L'indicateur de fonctionnement IND prend en compte plusieurs éléments et s'adapte en permanence.

Selon une possibilité, la corrélation entre valeurs réelles VR et valeurs estimées VE sur la période glissante passée est une corrélation dynamique qui prend en compte l'évolution des valeurs réelles VR et valeurs estimées VE. Il peut s'agir d'une comparaison obtenue par différents modes de calculs, par exemple des convolutions mathématiques. Alternativement ou en outre, les modes de calculs peuvent être adaptés empiriquement et/ou selon l'engin 1 et l'infrastructure 3 considérée.

La corrélation peut être calculée de telle sorte à ne prendre en compte certains phénomènes qu'à partir d'un niveau déterminé de récurrence ou magnitude (fonctionnement de type filtre passe-bas / passe-haut). Par exemple si une seule valeur estimée VE est fortement inexacte, l'impact sur l'indice de confiance CFI sera limité alors qu'une inexactitude persistante fera diminuer l'indice de confiance CFI.

L'indicateur de fonctionnement IND peut être relatif à la sécurité, à une grandeur physique comme un ratio par rapport à une vitesse maximale, etc.

Le modèle de contraintes MOD représente les contraintes théoriques, par exemple définies par avance, concernant les limites à ne pas dépasser par l'engin 1 à l'approche ou au départ de l'infrastructure 3. Le modèle de contraintes MOD est en pratique défini par le donneur d'ordre de l'opération visant à l'approche ou au départ de l'engin 1 de l'infrastructure 3.

Les valeurs estimées VE sont une projection dans le futur qui sont obtenues à partir des valeurs réelles VR passées.

Il est par ailleurs vérifié en permanence si les valeurs estimées VE correspondent bien aux valeurs réelles VR. Le ou les indices de confiance CFI sont ainsi déterminés et utilisés dans le calcul de l'indicateur de fonctionnement IND.

Les valeurs estimées VE sont donc comparées au modèle de contraintes MOD pour savoir si les limites de l'engin 1 par rapport à l'infrastructure 3 seront bien respectées dans la période glissante future. L'exactitude des valeurs estimées VE est également prise en compte pour éviter de dépasser les valeurs limites LIM par manque d'exactitude des calculs.

Le modèle de contraintes MOD peut être relatif à un type d'engin 1 en particulier voire à un engin 1 en particulier en étant adapté aux variations de fabrication et de performances d'un engin 1 à l'autre.

Par ailleurs, le modèle de contraintes MOD est relatif à un couple engin 1-infrastructure 3. Il est ainsi possible que l'infrastructure 3 se déplace. Par exemple, si l'infrastructure 3 est un bateau, elle peut être soumise à un déplacement selon une trajectoire déterminée pour aller d'un point à un autre mais également au tangage et au roulis ou tout autre mouvement. Si l'infrastructure 3 est fixe, en ville par exemple, les obstacles et la densité des immeubles génèrent des perturbations aérologiques qui peuvent perturber les arrivées et départs, en particuliers des aéronefs.

Les calculs restent par ailleurs frugaux puisqu'ils sont réalisés de manière glissantes sur des périodes définies limitées. Les calculs peu pertinents sont ainsi éliminés.

Par ailleurs, du fait de son adaptabilité, le procédé peut être utilisé avec une grande variété d'engins 1 et d'infrastructures 3 et une grande variété de mouvements relatifs possibles entre l'engin 1 et de l'infrastructure 3.

Les valeurs réelles VR horodatées relatives à une trajectoire et/ou à un emplacement relatif de l'engin 1 par rapport à l'infrastructure 3 incluent des commandes de pilotage CDE de l'engin 1 et/ou de l'infrastructure 3.

Non seulement, les valeurs réelles VR sont relatives au comportement de l'engin 1 mais également aux commandes de pilotage CDE qui lui sont appliquées. Il est en effet important de savoir si le sens d'avancement correspond à une commande de trajectoire rectiligne ou en virage et également si une accélération, une décélération ou un freinage sont appliqués. Il est en effet avantageux de connaitre la complexité de la manœuvre qui peut nécessiter plus ou moins de finesse et de précision de pilotage.

Les commandes de pilotage CDE peuvent inclure le cap, la commande de vitesse ou d'accélération, un changement d'altitude ou de profondeur en cours.

A chaque valeur estimée VE correspond un indice de confiance CFI correspondant. Cette disposition permet de gagner en précision dans la détermination de l'au moins un indicateur de fonctionnement IND.

Alternativement, il peut être prévu un seul indice de confiance CFI pour plusieurs valeurs estimées VE. Ceci peut être choisi dans le but de limiter les calculs réalisés.

La période glissante future peut être identique ou différente de la période glissante passée. Selon une possibilité, la période glissante future correspond à trois fois la période passée.

L'au moins un indicateur de fonctionnement IND fait référence à :
une prévision de fonctionnement « anormal » lorsqu'au moins une valeur estimée VE est hors d'au moins une plage de fonctionnement PLA,
une prévision de fonctionnement « à adapter » lorsque les valeurs estimées VE sont comprises dans les plages de fonctionnement PLA et lorsque au moins une valeur estimée VE est à l'intérieur d'une marge dynamique MD d'une plage de fonctionnement PLA partant d'une valeur limite de ladite plage de fonctionnement PLA,
une prévision de fonctionnement « normal » lorsque les valeurs estimées VE sont comprises dans les plages de fonctionnement PLA en dehors des marges dynamiques MD.

La marge dynamique MD est une portion de la plage de fonctionnement PLA proche d'une valeur limite. Une plage de fonctionnement PLA peut être relative à une valeur d'accélération relative, à une valeur de vitesse relative ou un emplacement relatif entre l'engin 1 et l'infrastructure 3.

Pour le cas de la vitesse et de l'accélération, une valeur limite maximale peut être définie avec une marge dynamique MD partant de cette valeur maximale et descendant vers une valeur maximale de sécurité qui est inférieure.

Une valeur limite nulle peut être définie et dans ce cas, aucune marge dynamique MD peut n'être prévue pour une vitesse proche d'une vitesse nulle par exemple. Alternativement, une vitesse positive minimale peut être définie avec une marge dynamique MD allant jusqu'à une vitesse minimale de sécurité supérieure à la vitesse minimale.

L'emplacement relatif peut comprendre une valeur limite minimale et une valeur limite maximale avec chaque fois une marge dynamique MD.

Trois plages de fonctionnement PLA peuvent être définies pour chaque composante spatiale, c'est-à-dire en hauteur, en distance longitudinale et en distance transversale. Il est également possible de prévoir un repère relatif entre l'engin 1 et l'infrastructure 3 pour limiter les calculs.

Par ailleurs, les valeurs limites LIM d'accélérations et de vitesses peuvent être différentes selon l'emplacement relatif de l'engin 1 et de l'infrastructure 3. L'au moins un indicateur de fonctionnement IND est adaptatif.

L'au moins un indicateur de fonctionnement IND est particulièrement intéressant lorsqu'un fonctionnement « anormal » ou « à adapter » est prévu car il est possible d'adapter l'accélération relative, la vitesse relative et/ou l'emplacement relatif pour que l'indicateur de fonctionnement IND reviennent à un fonctionnement « normal ».

Il peut également être prévu une pluralité d'indicateurs de fonctionnement, chaque indicateur de fonctionnement IND étant relatif à une ou plusieurs plages de fonctionnement PLA. Notamment, un indicateur de fonctionnement IND peut être relatif à l'ensemble des plages de fonctionnement PLA de sorte à indiquer de manière claire toute prévision anormale ou nécessitant une adaptation du pilotage de l'engin 1 et/ou de l'infrastructure 3.

Le ou les indices de confiance CFI influent sur au moins une marge dynamique MD, l'au moins une marge dynamique MD étant augmentée lorsque le ou les indices de confiance CFI diminuent.

Un indice de confiance CFI faible signifie que la prévision des valeurs estimées VE pour la période glissante passée est relativement peu précise. L'indice de confiance CFI est un outil permettant de quantifier cette inexactitude.

Si les valeurs estimées VE sont relativement inexactes, l'augmentation de la marge dynamique MD est utile pour le pilotage de l'engin 1.

Chaque marge dynamique MD peut être définie de telle sorte à ne pas descendre en deçà d'une valeur plancher correspondante lorsque l'indice de confiance CFI est maximal.

La valeur plancher correspond à une marge de sécurité SEC du modèle de contraintes MOD. Cette marge de sécurité SEC est fixe et considérée comme une donnée d'entrée.

Le modèle de contraintes MOD définit ainsi un domaine opérationnel de sécurité DOS dans chaque plage de fonctionnement PLA en dehors des marges de sécurité SEC. Il s'agit des domaines autorisés par le modèle de contraintes pour l'engin 1.

Le procédé permet ainsi de déterminer de nouvelles marges plus larges qui sont les marges dynamiques MD. Les marges dynamiques MD prennent en compte les conditions réelles de sorte à définir un domaine opérationnel dynamique DOD qui est réduit par rapport au domaine opérationnel de sécurité DOS ou qui est équivalent lorsque les marges dynamiques MD sont les mêmes que les marges de sécurités SEC.

Il apparait ainsi que le domaine opérationnel dynamique DOD est en permanence adapté et que l'indicateur de fonctionnement IND prend en compte cette adaptation.

Ainsi, le résultat du procédé de détermination, l'au moins un indicateur de fonctionnement IND est simple et facilement compréhensible par l'utilisateur sans qu'il soit nécessaire pour l'utilisateur de suivre d'autres paramètres de fonctionnement directement comme l'accélération relative, la vitesse relative ou l'emplacement relatif.

L'au moins un indicateur de fonctionnement IND est une synthèse dynamique, évolutive en temps réel, des conditions locales et des possibilités de manœuvre de l'engin 1.

Les valeurs estimées VE sont déterminées à des pas de temps définis, à chaque pas de temps correspondant au moins une valeur estimée VE.

Cette disposition permet de réduire la puissance de calcul nécessaire car les pas de temps peuvent être plus ou moins rapprochés. A chaque pas de temps, différentes valeurs estimées VE peuvent être calculées comme au moins une position relative de l'engin 1 par rapport à l'infrastructure 3, une vitesse relative ou une accélération relative.

Le pas de temps peut être variable ou constant. Le pas de temps est défini par rapport aux caractéristiques de l'engin 1 en ce qui concerne ses possibilités de déplacements ou manœuvrabilité.

Ainsi, si un engin 1 peut accélérer rapidement, le pas de temps peut être défini comme suffisamment court pour suivre le déplacement de l'engin 1 de manière suffisante.

Si la valeur estimée VE concerne l'emplacement relatif de l'engin 1 par rapport à l'infrastructure 3, la capacité de l'engin 1 à faire évoluer de cap CA rapidement peut également être prise en compte pour définir le pas de temps.

Le pas de temps peut également être adapté au cours du temps en fonction de la vitesse et/ou de l'accélération. En effet, si l'engin 1 ralentit, il peut être avantageux de réduire le pas de temps pour limiter les calculs à réaliser.

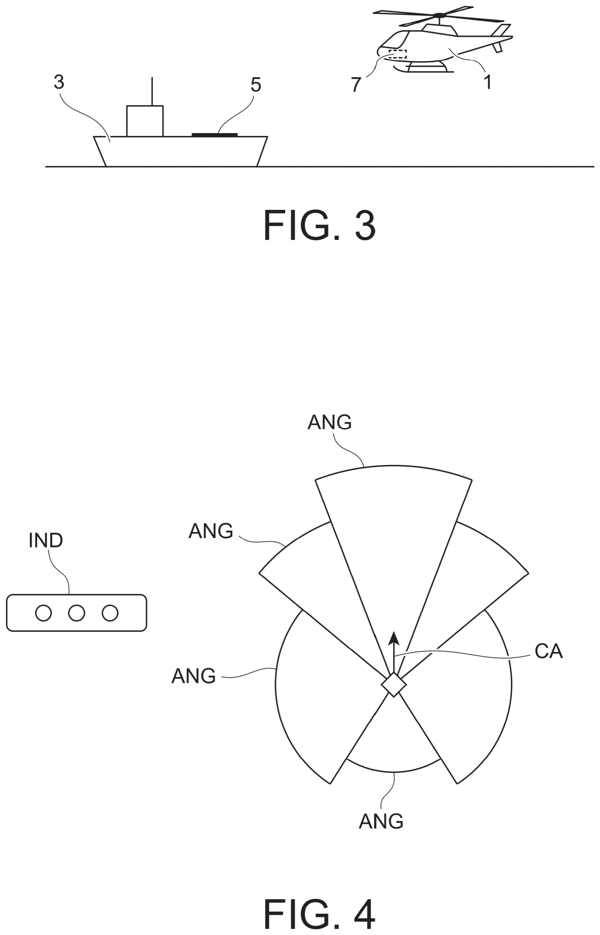

Comme illustré aux figures 2 et 4, le procédé de détermination d'au moins un indicateur de fonctionnement IND comprend une étape additionnelle E5 consistant à déterminer au moins deux secteurs angulaires ANG de compatibilité de vitesses et/ou accélérations avec le modèle de contraintes MOD, chaque secteur angulaire ANG étant défini entre deux caps possibles de l'engin 1.

En d'autres termes, seules certaines vitesses ou accélérations peuvent être prévues à l'intérieur d'un secteur angulaire ANG tout en respectant le modèle de contraintes MOD, c'est-à-dire en restant à l'intérieur des plages de fonctionnement PLA.

Par cap possible, il est entendu un cap qui n'est pas actuellement réglé mais peut être atteint par un réglage différent des commandes de l'engin 1.

Les secteurs angulaires ANG peuvent être fixes pour un même engin 1 ou variables en fonction de divers paramètres comme l'accélération ou la vitesse relative.

Par cap, il est entendu une direction horizontale définie par un angle par rapport à une direction de référence comme une direction vers le nord.

Les vitesses ou accélérations compatibles peuvent être déterminées pour la période glissante future ou pour une période future différente. Par ailleurs, les pas de temps utilisés pour déterminer les valeurs estimées VE et l'au moins un indicateur de fonctionnement IND peuvent être utilisés.

Egalement, pour chaque secteur angulaire ANG, des pas de temps différents peuvent être utilisés pour calculer les vitesses et/ou accélérations compatibles.

Une pluralité de secteurs angulaires ANG de compatibilité de vitesses et ou accélérations sont déterminés. En particulier, la pluralité de secteurs angulaires ANG constitue un disque complet.

Pour chaque secteur angulaire ANG, les valeurs de vitesses et accélérations compatibles peuvent correspondre à une ou plusieurs valeurs limites LIM à ne pas dépasser. La marge dynamique MD peut être prise en compte pour conseiller de ne pas aller dans la marge dynamique MD.

La compatibilité peut alternativement ou en outre correspondre à une indication de respect du modèle de contraintes MOD lorsque les paramètres de commandes de l'engin 1 sont maintenus et que seul le cap CA est modifié.

Ainsi, il est possible d'informer le pilote de l'engin 1 des contraintes Limites en termes de vitesse, accélération ou emplacement par rapport à l'infrastructure 3 et/ou simplement signaler qu'un changement de cap CA est possible dans un ou plusieurs secteurs angulaires ANG.

La compatibilité peut être déterminée selon différents pas de temps en fonction des secteurs angulaires ANG. Le secteur angulaire ANG à l'intérieur duquel est situé le cap CA peut être mis à jour plus souvent que le secteur angulaire ANG à l'opposé. Il est en effet moins probable que cap CA soit modifié de 180° plutôt qu'il reste dans une direction proche de la direction actuelle.

Les pas de temps peuvent également être adaptables en fonction d'autres paramètres comme la connaissance de commandes à venir de l'engin 1 lors de réalisation de manœuvres selon un schéma de commande prédéfini. La finesse des commandes ou des temps de réponses des automatismes peuvent également être pris en compte.

Il peut être prévu des secteurs angulaires ANG d'angles et de tailles variables selon les compatibilités de vitesses et/ou d'accélération. Chaque secteur angulaire ANG correspond ainsi à une zone, qui peut être variable, avec des conditions sensiblement identiques en termes de pilotage de l'engin 1. Ainsi, il est possible de repérer visuellement rapidement quels changements de cap CA peuvent être effectués tout en respectant le modèle de contraintes MOD.

Le procédé de détermination d'au moins un indicateur de fonctionnement IND comprend une étape E1' consistant à disposer de données environnementales DE, lesdites données environnementales DE étant également prises en compte pour déterminer les valeurs estimées VE et/ou l'au moins un indicateur de fonctionnement IND.

Les données environnementales DE incluent des données relatives à la météo, l'ensoleillement, la luminosité, le vent, l'humidité, la pression et plus généralement toute données relative à un phénomène local ou général pouvant avoir un impact sur le déplacement de l'engin 1 et de l'infrastructure 3. Ainsi, les données environnementales DE incluent les données géographiques comme le relief ou la profondeur dans le cas d'engins 1 marins.

Les données environnementales DE peuvent être des constantes, peuvent correspondre à des mesures passées soit dans la période glissante passée soit dans une autre période passée plus longue ou plus courte. Ces données peuvent être tridimensionnelles et éventuellement horodatées.

Les données environnementales DE peuvent correspondre à une saisie manuelle ou à des valeurs moyennes par exemple en l'absence de données réelles. Les valeurs moyennes peuvent correspondre à des données statistiques historiques.

Le modèle de contraintes MOD présente des plages de fonctionnement PLA spécifiques en fonction de certaines données environnementales DE. Notamment, certaines marges de sécurité SEC peuvent être majorées lorsqu'un vent local dépasse une certaine valeur dans une certaine direction.

Il apparait donc que l'au moins un indicateur de fonctionnement IND est constamment adapté, en fonction des données d'entrées changeantes, ces données d'entrées étant les valeurs réelles VR, les valeurs estimées VE et/ou le modèle de contraintes MOD.

Les données environnementales DE considérées comme changeantes peuvent être disponibles à des pas de temps définis qui sont constants ou adaptables.

Lesdites données environnementales DE peuvent également être prises en compte pour déterminer les marges dynamiques MD.

Le procédé de détermination d'au moins un indicateur de fonctionnement IND comprend une étape E1" consistant à disposer de données d'état ET relatives à l'engin 1 et/ou l'infrastructure 3, lesdites données d'état ET étant également prises en compte pour déterminer les valeurs estimées VE et/ou l'au moins un indicateur de fonctionnement IND.

Les données d'état ET de l'engin 1 peuvent être relatives au fonctionnement normal de l'engin 1, à un choix de mode de fonctionnement, par exemple si seule une partie de différents moteurs est utilisée. Les données d'état ET peuvent également être relatives à une avarie constatée dans l'engin 1 ou un élément limitant le fonctionnement de l'engin 1 pour une ou plusieurs fonctions. Les données d'état peuvent également prendre en compte les qualifications de l'opérateur/pilote ou du niveau d'autonomie de l'engin.

Les données d'état ET peuvent être des constantes ou variables sur la période glissante passée ou sur une autre période passée.

Les valeurs réelles VR, les données environnementales DE et/ou les données d'état ET peuvent également être prises en compte pour définir la période glissante passée, la période glissante future et/ou le pas de temps défini.

Cette adaptation peut être permanente ou réalisée à des intervalles réguliers ou selon certaines conditions devant être remplies par valeurs réelles VR, les données environnementales DE et/ou les données d'état ET.

Cette adaptabilité permet à l'indicateur de fonctionnement IND obtenu d'être suffisamment précis tout en limitant la puissance de calcul nécessaire.

Le procédé de détermination d'au moins un indicateur de fonctionnement IND comprend une étape préalable E0 consistant à obtenir des valeurs réelles VR et/ou un modèle de contraintes MOD, l'obtention consistant à recueillir des données de capteurs et/ou système de contrôle 7 de l'engin 1 et/ou de l'infrastructure 3, ou des données externes.

Les données sont recueillies par connexion filaire ou sans fils. Selon un aspect de l'invention, l'étape préalable E0 consiste en outre à obtenir des données environnementales DE et/ou des données d'état ET de la même manière.

Le modèle de contraintes MOD peut également être obtenu par le système de contrôle de l'engin 1 et/ou de l'infrastructure 3 par connexion filaire ou sans fils. Le modèle de contraintes MOD peut également être enregistré en mémoire dudit système de contrôle. Le modèle de contraintes MOD peut être enregistré sous forme d'une base de données.

Le modèle de contraintes MOD est en pratique défini par le donneur d'ordre de l'opération visant à l'approche ou au départ de l'engin 1 de l'infrastructure 3. Il s'agit d'une donnée d'entrée. Le modèle de contraintes MOD comprend un ensemble de plages de fonctionnement PLA et de marges de sécurités SEC qui sont fixes.

Comme illustré à la figure 3, l'engin 1 est adapté pour coopérer avec l'infrastructure 3 de sorte à se positionner à un emplacement de réception 5 de l'infrastructure 3 après une approche et/ou à se séparer de l'infrastructure 3 et se déplacer de manière indépendante.

L'engin 1 est un aéronef ou un engin 1 marin. L'aéronef peut être un hélicoptère, un avion, un drone, etc. l'engin 1 peut être habité ou non.

L'engin 1 peut ainsi être un drone sous-marins un robot marin, une embarcation comme un bateau, un planeur sous-marin. L'engin 1 peut aussi être un véhicule mis en œuvre par câble(s). Les applications du procédé sont donc multiples.

L'engin 1 peut être piloté de l'intérieur ou à distance, par exemple de l'infrastructure 3 ou d'un autre endroit. L'engin 1 peut également être autonome et comprendre un système de pilotage paramétré pour lui permettre de coopérer avec l'infrastructure 3. Dans ce cas, l'indicateur de fonctionnement IND peut être une donnée d'entrée utilisée pour le pilotage de l'engin autonome. Un protocole de transmission spécifique peut être utilisé.

Pour certains engins 1, le modèle de contraintes MOD peut correspondre au « Ship Helicopter Operating Limits » ou SHOL.

L'infrastructure 3 peut correspondre à une piste d'atterrissage ou un vertiport au sol, sur un bâtiment fixe par rapport au sol comme des bâtiments ou constructions urbaines ou mobile par rapport au sol ou une étendue d'eau comme un navire, une plateforme offshore, etc. L'infrastructure 3 peut également être un aéronef.

Alternativement ou en outre, le procédé est adapté pour permettre le passage de l'engin 1 à proximité de l'infrastructure 3 tout en respectant le modèle de contraintes MOD. Cette disposition est notamment utile lorsque l'infrastructure 3 est mobile comme c'est le cas pour un bateau.

Le procédé de détermination d'au moins un indicateur de fonctionnement IND comprend une étape E6 d'affichage d'une représentation graphique relative à l'au moins un indicateur sur une interface de l'engin 1, une interface de l'infrastructure 3 et/ou une interface externe.

Comme illustré à la figure 4, un indicateur de fonctionnement IND peut être représenté sous forme de symbole coloré. La couleur et/ou le symbole peuvent être différents si le fonctionnement est « normal », « anormal » ou « à adapter ». La représentation graphique peut également comprendre des caractères, mots ou expression éventuellement et être complétée par un indicateur sonore. La représentation graphique peut également être réalisée sous d'autres formes.

L'au moins un indice de confiance peut également être représenté. Cette disposition permet de vérifier si les manœuvres en cours sont facilement prévisibles par le procédé et ainsi si les manœuvres correspondent à celles normalement attendues.

La représentation graphique comprend également les au moins deux secteurs angulaires ANG de compatibilité de vitesses et/ou accélérations. La représentation graphique peut correspondre à un disque avec différentes parties colorées laissant apparaitre des couleurs et/ou formes qui peuvent être augmentées ou réduites en taille.

Le cap CA peut être sur la même représentation graphique en démarrant du centre du disque. Les routes et vitesses compatibles sont ainsi faciles à repérer.

Cette représentation graphique des secteurs angulaires ANG laisse apparaitre de meilleures conditions si le maintien du cap CA à certaines limitations pour respecter le modèle de contraintes MOD.

La représentation graphique peut également inclure un historique comprenant des valeurs réelles VR de la période glissante passée et/ou de périodes antérieures.

Comme représenté à la figure 1 un produit programme d'ordinateur comprend des instructions de code agencées pour mettre en œuvre les étapes du procédé de détermination d'au moins un indicateur de fonctionnement IND tel que décrit ci-dessus lorsque ledit programme est exécuté sur un système de contrôle 7 de l'engin 1 et/ou de l'infrastructure 3.

Le système de contrôle 7 inclut au moins un processeur comprenant le produit programme ordinateur. Le système de contrôle 7 peut être constitué d'une seule entité locale au niveau de l'engin 1 et/ou de l'infrastructure 3 ou être déporté. Alternativement, le système de contrôle 7 peut comprendre plusieurs entités adaptées pour communiquer ensemble.

Le système de contrôle 7 comprend l'interface décrite ci-dessus. Ainsi, selon les cas, il peut être utile d'avoir l'interface dans l'engin 1 par exemple si celui-ci est habité ou dans l'infrastructure 3 si l'engin 1 est autonome. Il peut également y avoir une interface dans l'engin 1 et une interface dans l'infrastructure 3.

Le système de contrôle 7 inclut également le ou les capteurs évoqués plus hauts. Dans le présent texte, l'engin 1 est considéré comme la partie se déplaçant le plus comparativement à l'infrastructure 3. Bien évidemment, ces termes pourraient être inversés et l'invention toujours fonctionner selon le même principe, l'au moins un indicateur de fonctionnement IND étant lié aux déplacements relatifs de l'engin 1 par rapport à l'infrastructure 3.

Le procédé de détermination peut être mis en œuvre pour plusieurs engins 1 simultanément. Une pluralité de systèmes de contrôle 7 distincts correspondants peut être utilisés ou un seul système centralisé.

Lorsque le procédé est mis en œuvre avec une pluralité d'engins 1, les données environnementales DE d'un engin 1 prennent en compte les valeurs estimées VE des autres engins 1 ainsi que les modèles de contraintes des autres engins 1.

Dans ce cas, les systèmes de contrôle et/ou le système centralisé sont agencés pour permettre le déplacement de la pluralité d'engins 1 sans conflits.

Comme il va de soi, l'invention ne se limite pas à la seule forme d'exécution décrite ci-dessus à titre d'exemple, elle en embrasse au contraire toutes les variantes de réalisation.

## Revendications

1. Procédé de détermination d'au moins un indicateur de fonctionnement (IND) lié au déplacement d'au moins un engin (1) par rapport à une infrastructure (3), le procédé de détermination comprenant les étapes suivantes :
- (E1) disposer, sur une période glissante passée, de valeurs réelles (VR) horodatées relatives à une trajectoire et/ou à un emplacement relatif de l'engin (1) par rapport à l'infrastructure (3),
- (E2) disposer d'un modèle de contraintes (MOD) incluant des données relatives à des plages de fonctionnement (PLA) délimitées par des valeurs limites (LIM) d'accélérations, de vitesses et/ou de distances minimales entre l'engin (1) et l'infrastructure (3),
- (E3) déterminer à partir des valeurs réelles (VR), sur une période glissante future, des valeurs estimées (VE) horodatées relatives à la trajectoire et/ou à l'emplacement relatif de l'engin (1) par rapport à l'infrastructure (3),
- (E4) déterminer l'au moins un indicateur de fonctionnement (IND) en fonction du modèle de contraintes (MOD), des valeurs estimées (VE) et d'un ou plusieurs indices de confiance (CFI) relatifs à une ou plusieurs valeurs estimées (VE), le ou les indices de confiance (CFI) étant obtenus par corrélation entre valeurs réelles (VR) et valeurs estimées (VE) sur la période glissante passée.

2. Procédé de détermination d'au moins un indicateur de fonctionnement (IND) selon la revendication 1, dans lequel l'au moins un indicateur de fonctionnement (IND) fait référence à :
- une prévision de fonctionnement « anormal » lorsqu'au moins une valeur estimée (VE) est hors d'au moins une plage de fonctionnement (PLA),
- une prévision de fonctionnement « à adapter » lorsque les valeurs estimées (VE) sont comprises dans les plages de fonctionnement (PLA) et lorsque au moins une valeur estimée (VE) est à l'intérieur d'une marge dynamique (MD) d'une plage de fonctionnement (PLA) partant d'une valeur limite de ladite plage de fonctionnement (PLA),
- une prévision de fonctionnement « normal » lorsque les valeurs estimées (VE) sont comprises dans les plages de fonctionnement (PLA) en dehors des marges dynamiques (MD).

3. Procédé de détermination d'au moins un indicateur de fonctionnement (IND) selon la revendication 2, dans lequel le ou les indices de confiance (CFI) influent sur au moins une marge dynamique (MD), l'au moins une marge dynamique (MD) étant augmentée lorsque le ou les indices de confiance (CFI) diminuent.

4. Procédé de détermination d'au moins un indicateur de fonctionnement (IND) selon l'une des revendications 1 à 3, dans lequel les valeurs estimées (VE) sont déterminées à des pas de temps définis, à chaque pas de temps correspondant au moins une valeur estimée (VE).

5. Procédé de détermination d'au moins un indicateur de fonctionnement (IND) selon l'une des revendications 1 à 4, comprenant une étape additionnelle (E5) consistant à déterminer au moins deux secteurs angulaires (ANG) de compatibilité de vitesses et/ou accélérations avec le modèle de contraintes (MOD), chaque secteur angulaire (ANG) étant défini entre deux caps possibles de l'engin (1).

6. Procédé de détermination d'au moins un indicateur de fonctionnement (IND) selon l'une des revendications 1 à 5, comprenant une étape (E1') consistant à disposer de données environnementales (DE), lesdites données environnementales (DE) étant également prises en compte pour déterminer les valeurs estimées (VE) et/ou l'au moins un indicateur de fonctionnement (IND).

7. Procédé de détermination d'au moins un indicateur de fonctionnement (IND) selon l'une des revendications 1 à 6, comprenant une étape (E1") consistant à disposer de données d'état (ET) relatives à l'engin (1) et/ou l'infrastructure (3), lesdites données d'état (ET) étant également prises en compte pour déterminer les valeurs estimées (VE) et/ou l'au moins un indicateur de fonctionnement (IND).

8. Procédé de détermination d'au moins un indicateur de fonctionnement (IND) selon l'une des revendications 1 à 7, comprenant une étape préalable (E0) consistant à obtenir des valeurs réelles (VR) et/ou un modèle de contraintes (MOD), l'obtention consistant à recueillir des données de capteurs et/ou système de contrôle (7) de l'engin et/ou de l'infrastructure (3), ou des données externes.

9. Procédé de détermination d'au moins un indicateur de fonctionnement (IND) selon l'une des revendications 1 à 8, dans lequel l'engin (1) est adapté pour coopérer avec l'infrastructure (3) de sorte à se positionner à un emplacement de réception (5) de l'infrastructure (3) après une approche et/ou à se séparer de l'infrastructure (3) et se déplacer de manière indépendante.

10. Procédé de détermination d'au moins un indicateur de fonctionnement (IND) selon l'une des revendications 1 à 9, comprenant une étape (E6) d'affichage d'une représentation graphique relative à l'au moins un indicateur sur une interface de l'engin (1), une interface de l'infrastructure (3) et/ou une interface externe.

11. Produit programme d'ordinateur comprenant des instructions de code agencées pour mettre en œuvre les étapes d'un procédé de détermination d'au moins un indicateur de fonctionnement (IND) selon l'une des revendications 1 à 10 lorsque ledit programme est exécuté sur un système de contrôle (7) de l'engin (1) et/ou de l'infrastructure (3).
